# EUROPEAN PATENT SPECIFICATION

(11) **EP 0 520 584 B1**
(45) Date of publication and mention of the grant of the patent: **27.05.1998**
(21) Application number: 92201899.9
(22) Date of filing: 25.06.1992
(51) Int. Cl.: C08G 67/02

(54) **Process for the preparation of polymers of carbon monoxide and olefinically unsaturated compounds**
Verfahren zur Darstellung von Polymeren aus Kohlenmonoxid und olefinisch ungesättigten Verbindungen
Procédé de préparation de polymères de monoxyde de carbone avec des composés oléfiniquement insaturés

(30) Priority: 27.06.1991 NL 9101114
(43) Date of publication of application: 30.12.1992
(73) Proprietor: SHELL INTERNATIONALE RESEARCH MAATSCHAPPIJ B.V., 2596 HR Den Haag (NL)
(72) Inventor: Keijsper, Johannes Jacobus, NL-1031 CM Amsterdam (NL)

(56) References cited:
- EP-A- 0 248 483
- EP-A- 0 361 623
- EP-A- 0 443 687
- EP-A- 0 485 035
- EP-A- 0 485 058
- NL-A- 8 901 311

## Description

The invention relates to a process for the preparation of linear alternating polymers of carbon monoxide with one or more olefinically unsaturated compounds.

Linear alternating polymers of carbon monoxide with one or more olefinically unsaturated compounds, i.e. linear polymers in which the units originating in carbon monoxide and the units originating in the olefinically unsaturated compounds are present in a substantially alternating order, can be prepared by contacting the monomers at elevated temperature and pressure with a catalyst containing a Group VIII metal component.

The above-mentioned polymer preparation can be carried out in two ways which, depending on the continuous phase in which the polymerization takes place, are referred to as liquid phase polymerization and gas phase polymerization. In liquid phase polymerization the continuous phase is usually formed by a liquid diluent in which the catalyst is soluble but the polymers formed are insoluble or virtually insoluble. At the end of the polymerization the polymers are separated from the diluent and the pure diluent intended for a subsequent polymerization is recovered from the remaining liquid. In gas phase polymerization (e.g. disclosed in EP-A-0 248 483) the continuous phase is formed by gaseous carbon monoxide and optionally one or more of the other monomers, in so far as they are present in gaseous form in the reactor.

For the preparation of the polymers on an industrial scale, gas phase polymerization is much to be preferred to liquid phase polymerization in view of the fact that in a gas phase polymerization process the above-mentioned separation step, as well as the purification step, can be omitted. If implemented on an industrial scale, these separation and purification steps involve considerable expense.

During a previous investigation carried out by the applicant into the preparation of the present linear alternating polymers by gas phase polymerization using catalysts containing a Group VIII metal component it was found that the activity of the catalysts can be enhanced considerably by introducing an alcohol into the polymerization reactor prior to the polymerization. A considerable drawback of the use of alcohols in the above-mentioned polymerization is that it may be very difficult to remove the alcohols completely from the polymer products so that in some instances at least a part of the alcohol employed remains behind in the polymers. If the polymers are used as food packaging material, the presence of alcohol is not permissible and may thus form a substantial problem.

It has now surprisingly been found that in the preparation of the present linear alternating polymers using gas a phase polymerization the activity-enhancing effect on the catalyst, as mentioned hereinbefore, is also obtained if water, instead of an alcohol, is introduced into the polymerization reactor prior to the polymerization.

The present patent application therefore relates to a process for the preparation of polymers, wherein linear alternating polymers of carbon monoxide with one or more olefinically unsaturated compounds are prepared by contacting the monomers at a temperature of at least 25°C and a pressure of at least 2 bar with a catalyst containing a Group VIII metal component, the polymer preparation being carried out as a gas phase polymerization, and water being present at the start of the polymerization, wherein the quantity of water present at the start of the polymerization is more than 1 mol per gram atom Group VIII metal.

This finding is surprising, in particular because water is a poor solvent for the catalyst composition and, accordingly, water would not be a very suitable diluent for the polymerization.

The quantity of water which according to the invention should be present at the start of the polymerization is not critical. The desired activity enhancement can be achieved both by the addition of a small quantity of water and by the addition of larger quantities of water. The quantity of water present at the start of the polymerization is preferably more than 10 mol per gram atom Group VIII metal. The upper limit of the quantity of water is set by the requirement that gas should form the continuous phase in the reactor. The introduction of water prior to the polymerization can very suitably take place by introducing the water either separately or together with the catalyst or with one or more of the monomers during the charging of the reactor.

In the gas phase polymerization according to the invention, a catalyst is used which contains a Group VIII metal component. In this patent application, Group VIII metals are understood to be the noble metals ruthenium, rhodium, palladium, osmium, iridium and platinum, as well as the iron group metals iron, cobalt and nickel. Catalysts containing palladium, nickel or cobalt as Group VIII metal are preferred. Palladium is particularly preferred as Group VIII metal. The Group VIII metal component is suitably incorporated into the catalyst in the form of a salt, preferably in the form of a salt of a carboxylic acid, in particular in the form of an acetate.

In addition to a Group VIII metal component, the catalysts preferably contain a bidentate ligand which can form a complex with the Group VIII metal via two phosphorus-, nitrogen- and/or sulphur-containing dentate groups. If a nitrogen bidentate ligand is used, compounds are preferred of the general formula 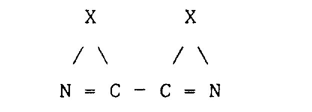 in which X represents an organic bridging group containing three or four atoms in the bridge, of which at least two are carbon atoms, such as 2,2'-bipyridine and 1,10-phenanthroline. If a sulphur bidentate ligand is used, a compound is preferred of the general formula R¹S-R-SR¹ in which R¹ represents an optionally polar substituted hydrocarbyl group and R represents a divalent organic bridging group containing at least two carbon atoms in the bridge, such as 1,2-bis(ethylthio)ethane and cis-1,2-bis-(benzylthio)-ethene. It is preferred to use phosphorus bidentate ligands of the general formula (R¹)₂P-R-P(R¹)₂ in which R and R¹ have the meanings indicated hereinbefore. There is further preference for the use of such phosphorus bidentate ligands in which R¹ represents an aryl group carrying at least one alkoxy substituent at an ortho position relative to phosphorus. A very suitable compound for the present purpose is 1,3-bis[bis(2-methoxyphenyl)phosphino]propane.

If in the catalysts use is made of a nitrogen or sulphur bidentate ligand, the quantity employed is preferably 0.5-100 and in particular 1-50 mol per gram atom Group VIII metal. If a phosphorus bidentate ligand is used, the quantity employed is preferably 0.5-2 and in particular 0.75-1.5 mol per gram atom Group VIII metal.

Besides a Group VIII metal and a phosphorus, nitrogen or sulphur bidentate ligand, the catalysts preferably contain an acid component. Examples of suitable acid components are strong organic acids such as para-toluenesulphonic acid, trifluoroacetic acid and methylsulphonic acid. Examples of very suitable acid components are the following acids:
a) acids with a pKa of at least 2 such as phosphoric acid, tartaric acid, citric acid and ascorbic acid, and
b) Lewis acids of the general formula MFₙ where M represents an element which can form a Lewis acid with fluorine, where F represents fluorine and where n has the value 3 or 5, such as borium trifluoride, aluminium trifluoride and antimony pentafluoride.

There is particular preference for Lewis acid/Brönsted acid mixtures as acid component in the catalysts. Preferably, these mixtures contain 0.1-10 and in particular 0.5-5 mol Brönsted acid per mol Lewis acid. Very suitable Lewis acids for application in these mixtures are fluorides such as borium trifluoride, titanium tetrafluoride, phosphorus pentafluoride and antimony pentafluoride. As Brönsted acid, hydrofluoric acid is very suitable. The Lewis acid/Brönsted acid mixtures are preferably selected from: tetrafluoroboric acid, hexafluorotitanic acid, hexafluorophosphoric acid and hexafluoroantimonic acid.

The quantity of acid component in the catalysts is preferably 0.5-200 and in particular 1-100 mol per gram atom Group VIII metal, with the proviso that if a Lewis acid/Brönsted acid mixture is used, these quantities refer to the Lewis acid present in the mixture.

To enhance the activity of the catalysts, an organic oxidizing agent can also be incorporated therein. Aromatic nitro compounds such as nitrobenzene are very suitable for this purpose. The quantity of organic oxidizing agent used is preferably 5-5000 and in particular 10-1000 mol per gram atom Group VIII metal.

In the gas phase polymerization of the invention preferably a catalyst is used which is deposited on a carrier.

If in the gas phase polymerization of the invention a catalyst is used which is deposited on a carrier, there is preference for catalysts which contain 10-100,000 and in particular 50-10,000 mg Group VIII metal per kg carrier.

The deposition of the catalyst onto the carrier may suitably take place by impregnating the carrier with a solution or suspension of the catalyst in a liquid diluent containing at least partly water, optionally followed by partial removal of the diluent, with water remaining behind in the catalyst. If the catalyst comprises a plurality of components, the catalyst preparation may take place either by impregnating the carrier with all components together or with one or more of the components separately. The carrier is preferably a porous carrier, whilst both inorganic and organic carriers are eligible. Examples of suitable carriers are silica, alumina, talc, charcoal, cellulose, dextrose and dextran gel. Polymers such as polyethylene, polypropylene and polystyrene can also be used as carriers. When the gas phase polymerization is carried out with the catalyst deposited on a carrier, products are obtained in which the prepared polymer occurs together with the carrier used. Thus, depending on the nature and quantity of the carrier, products with a very wide range of properties and applications can be prepared. If desired, the carrier can be wholly or partly removed from the product at the end of the polymerization by treating the product either with a solvent in which the prepared polymer is soluble but the carrier is insoluble, or with a solvent in which the carrier is soluble but the prepared polymer is insoluble.

In the gas phase polymerization of the invention, a polymer whose structure and composition corresponds substantially to that of the polymer to be prepared is preferably used as carrier for the catalyst.

The olefinically unsaturated compounds which can be polymerized with carbon monoxide according to the invention, may be compounds which consist exclusively of carbon and hydrogen, as well as compounds which besides carbon and hydrogen also contain one or more heteroatoms. The process according to the invention is preferably used for the preparation of polymers of carbon monoxide with one or more olefinically unsaturated hydrocarbons. Examples of suitable hydrocarbon monomers are ethene, propene, butene-1, hexene-1, octene-1, styrene, cyclopentene, norbornene and dicyclopentadiene. The process according to the invention is in particular very suitable for the preparation of copolymers of carbon monoxide with ethene and terpolymers of carbon monoxide with ethene and an α-olefin, in particular propene.

The quantity of catalyst used in the process according to the invention can vary within wide limits. Per mol olefinically unsaturated compound to be polymerized, a quantity of catalyst is preferably used which contains 10⁻⁷ to 10⁻³ and in particular 10⁻⁶ to 10⁻⁴ gram atom Group VIII metal.

The polymerization is preferably carried out at a temperature of 25-150°C and a pressure of 2-150 bar and in particular at a temperature of 30-130°C and a pressure of 5-100 bar. The molar ratio of the olefinically unsaturated compounds relative to carbon monoxide is preferably 10:1 to 1:10 and in particular 5:1 to 1:5. The polymer preparation according to the invention can be carried out either batchwise or continuously.

The invention will now be illustrated with reference to the following examples.

### Example 1 (for comparison)

A carbon monoxide/ethene copolymer was prepared as follows. A catalyst composition was prepared by suspending 8 g of a linear alternating carbon monoxide/ethene copolymer with a pore volume of 0.5 ml/g into a catalyst solution containing:
20 ml dry methylethylketone,
0.0095 mmol palladium acetate,
0.19 mmol citric acid, and
0.01 mmol 1,3-bis[bis(2-methoxyphenyl)phosphino]propane,
evaporating the suspension thus obtained to dryness and drying the resulting catalyst composition for 2 hours at 50°C under reduced pressure.

The catalyst composition thus prepared was introduced into a stirred autoclave. After the air in the autoclave had been displaced by nitrogen, the autoclave content was brought to 85°C and a 1:1 carbon monoxide/ethene mixture was introduced until a pressure of 50 bar was reached. During the polymerization the pressure was maintained by continously supplying a 1:1 carbon monoxide/ethene mixture. After 4 hours the polymerization was terminated by cooling the reaction mixture to room temperature and releasing the pressure. 12.4 g copolymer was obtained. The polymerization rate was 1.1 kg copolymer/(g palladium.hour).

### Example 2

A carbon monoxide/ethene copolymer was prepared in substantially the same way as in example 1, but with the following differences:
a) prior to the polymerization 1 ml water was introduced into the reactor, and
b) the reaction time was 3 hours instead of 4 hours.

21.8 g copolymer was obtained. The polymerization rate was 4.6 kg copolymer/(g palladium.hour).

### Example 3

A carbon monoxide/ethene copolymer was prepared in substantially the same way as in example 1, but with the following differences:
a) prior to the polymerization 7 ml water was introduced into the reactor, and
b) the reaction time was 3 hours instead of 4 hours.

17.6 g copolymer was obtained. The polymerization rate was 3.2 kg copolymer/(g palladium.hour).

The favourable effect on the catalyst activity in the gas phase polymerization achieved by introducing water into the reactor prior to the polymerization can be seen by comparing the results of examples 2 and 3 with the result of comparative example 1. It was established by NMR analysis that the carbon monoxide/ethene copolymers prepared according to examples 1-3 were built up of linear chains in which the units originating in carbon monoxide and the units originating in ethene were present in an alternating order.

## Claims

1. Process for the preparation of polymers, wherein linear alternating polymers of carbon monoxide with one or more olefinically unsaturated compounds are prepared by contacting the monomers at a temperature of at least 25°C and a pressure of at least 2 bar with a catalyst containing a Group VIII metal component, the polymer preparation being carried out as a gas phase polymerization, and water being present at the start of the polymerization, wherein the quantity at water present at the start at the polymerization is more than 1 mol per gram atom Group VIII metal.

2. Process according to claim 1, characterized in that the quantity of water is more than 10 mol per gram atom Group VIII metal.

3. Process according to one or more of claims 1 or 2, characterized in that the catalyst contains
a) palladium as Group VIII metal,
b) a phosphorus bidentate ligand of the general formula (R¹)₂P-R-P(R¹)₂ where R¹ represents an optionally polar substituted hydrocarbyl group and R represents a divalent organic bridging group containing at least two carbon atoms in the bridge, and
c) an acid.

4. Process according to claim 3, characterized in that the catalyst contains a phosphorus bidentate ligand of the general formula (R¹)₂P-R-P(R¹)₂ where R¹ represents an aryl group carrying at least one alkoxy substituent at an ortho position relative to phosphorus, such as 1,3-bis[bis(2-methoxyphenyl)phosphino]propane.

5. Process according to claim 3 or 4, characterized in that the catalyst contains the phosphorus bidentate ligand in a quantity of 0.75-1.5 mol per gram atom Group VIII metal and the acid in a quantity of 1-100 mol per gram atom Group VIII metal.

6. Process according to one or more of claims 1-6, characterized in that the catalyst is deposited on a carrier such that the catalyst contains 50-10,000 mg Group VIII metal per kg carrier.

7. Process according to claim 6, characterized in that the carrier is a polymer whose structure and composition correspond to that of the polymer to be prepared.

8. Process according to one or more of claims 1-7, characterized in that as olefinically unsaturated compounds one or more hydrocarbons are used such as ethene or a mixture of ethene with an α-olefin such as propene, in that per mol olefinically unsaturated compound to be polymerized, a quantity of catalyst is used which contains 10⁻⁶ to 10⁻⁴ gram atom Group VIII metal, and in that the process is carried out at a temperature of 30-130 °C, a pressure of 5-100 bar and a molar ratio of the olefinically unsaturated compounds relative to carbon monoxide of 5:1 to 1:5.

## Patentansprüche

1. Verfahren zur Herstellung von Polymeren, worin lineare alternierende Polymere aus Kohlenmonoxid und einer oder mehreren olefinisch ungesättigten Verbindungen durch Inkontaktbringen der Monomeren bei einer Temperatur von wenigstens 25°C und bei einem Druck von wenigstens 2 bar mit einem Katalysator hergestellt werden, der eine Gruppe VIII-Metallkomponente enthält, wobei die Polymerherstellung als eine Gasphasenpolymerisation ausgeführt wird und zu Beginn der Polymerisation Wasser zugegen ist, wobei die zum Polymerisationsbeginn vorliegende Wassermenge mehr als 1 Mol je Grammatom Gruppe VIII-Metall beträgt.

2. Verfahren nach Anspruch 1, dadurch gekennzeichnet, daß die Wassermenge mehr als 10 Mol je Grammatom Gruppe VIII-Metall beträgt.

3. Verfahren nach Anspruch 1 oder 2, dadurch gekennzeichnet, daß der Katalysator
a) Palladium als Gruppe VIII-Metall,
b) einen Phosphorbidentatliganden mit der allgemeinen Formel (R¹)₂P-R-P(R¹)₂, worin R¹ eine gegebenenfalls polar substituierte Hydrocarbylgruppe darstellt und R für eine zweiwertige organische Brückengruppe steht, die wenigsten zwei Kohlenstoffatome in der Brücke enthält und
c) eine Säure enthält.

4. Verfahren nach Anspruch 3, dadurch gekennzeichnet, daß der Katalysator einen Phosphorbidentatliganden mit der allgemeinen Formel (R¹)₂P-R-P(R¹)₂ enthält, worin R¹ eine Arylgruppe darstellt, die wenigstens einen Alkoxysubstituenten in einer ortho-Stellung zum Phosphor trägt, wie 1,3-Bis[bis(2-methoxyphenyl)phosphino]propan.

5. Verfahren nach Anspruch 3 oder 4, dadurch gekennzeichnet, daß der Katalysator den Phosphorbidentatliganden in einer Menge von 0,75 - 1,5 Mol je Grammatom Gruppe VIII-Metall und die Säure in einer Menge von 1 - 100 Mol je Grammatom Gruppe VIII-Metall enthält.

6. Verfahren nach einem oder mehreren der Ansprüche 1 bis 5, dadurch gekennzeichnet, daß der Katalysator derart auf einem Träger abgelagert ist, daß der Katalysator 50 - 10.000 mg Gruppe VIII-Metall je kg Träger enthält.

7. Verfahren nach Anspruch 6, dadurch gekennzeichnet, daß der Träger ein Polymer ist, dessen Struktur und Zusammensetzung denjenigen des herzustellenden Polymers entsprechen.

8. Verfahren nach einem oder mehreren der Ansprüche 1 - 7, dadurch gekennzeichnet, daß als olefinisch ungesättigte Verbindungen ein oder mehrere Kohlenwasserstoffe verwendet werden, wie Ethen oder ein Gemisch aus Ethen mit einem α-Olefin wie Propen, daß je Mol olefinisch ungesättigter, zu polymerisierender Verbindung eine Katalysatormenge verwendet wird, die 10⁻⁶ bis 10⁻⁴ Grammatom Gruppe VIII-Metall enthält und daß das Verfahren bei einer Temperatur von 30 bis 130°C, einem Druck von 5 bis 100 bar und einem Molverhältnis der olefinisch ungesättigten Verbindungen zu Kohlenmonoxid von 5:1 bis 1:5 ausgeführt wird.

## Revendications

1. Procédé de préparation de polymères, conformément auquel on prépare des polymères alternants et linéaires du monoxyde de carbone et d'un ou plusieurs composés oléfiniquement insaturés par la mise en contact des monomères à une température d'au moins 25°C et à une pression d'au moins 2 bars avec un catalyseur contenant un composant à métal du groupe VIII, la préparation du polymère étant entreprise sous forme de polymérisation en phase gazeuse, et de l'eau étant présente à l'amorce de la polymérisation, où la quantité d'eau présente à l'amorce de la polymérisation est supérieure à 1 mole par atome-gramme de métal du groupe VIII.

2. Procédé suivant la revendication 1, caractérisé en ce que la proportion d'eau est supérieure à 10 moles par atome-gramme de métal du groupe VIII.

3. Procédé suivant la revendication ou 2, caractérisé en ce que le catalyseur contient
a) du palladium à titre de métal du groupe VIII,
b) un ligand bidentate phosphoré de la formule générale (R¹)₂P-R-P(R¹)₂, dans laquelle R¹ représente un radical hydrocarbyle à substitution polaire éventuelle et R représente un groupe de pontage organique bivalent contenant au moins deux atomes de carbone dans le pont, et
c) un acide.

4. Procédé suivant la revendication 3, caractérisé en ce que le catalyseur contient un ligand bidentate phosphoré de la formule générale (R¹)₂P-R-P(R¹)₂, dans laquelle R¹ représente un radical aryle portant au moins un substituant du type alcoxy en une position ortho par rapport au phosphore, comme le 1,3-bis-[bis(2-méthoxyphényl)phosphino]propane.

5. Procédé suivant la revendication 3 ou 4, caractérisé en ce que le catalyseur contient le ligand bidentate phosphoré en une proportion de 0,75 à 1,5 mole par atome-gramme de métal du groupe VIII et l'acide en une proportion de 1 à 100 moles par atome-gramme de métal du groupe VIII.

6. Procédé suivant une ou plusieurs des revendications 1 à 5, caractérisé en ce que le catalyseur est déposé sur un support tel que le catalyseur contienne de 50 à 10 000 mg de métal du groupe VIII par kg de support.

7. Procédé suivant la revendication 6, caractérisé en ce que le support est un polymère dont la structure et la composition correspondent à celles du polymère à préparer.

8. Procédé suivant une ou plusieurs des revendications 1 à 7, caractérisé en ce que, à titre de composés oléfiniquement insaturés, on utilise un ou plusieurs hydrocarbures, tels que l'éthène, ou un mélange d'éthène et d'une α-oléfine comme le propène, en ce que, par mole de composé oléfiniquement insaturé à polymériser, on utilise une proportion de catalyseur qui contienne 10⁻⁶ à 10⁻⁴ atome-gramme de métal du groupe VIII, et en ce que l'on entreprend le procédé à une température de 30 à 130°C, sous une pression de 5 à 100 bars et avec un rapport molaire des composés oléfiniquement insaturés au monoxyde de carbone de 5:1 à 1:5.
